# EUROPEAN PATENT SPECIFICATION

(11) **EP 2 995 896 B1**
(45) Date of publication and mention of the grant of the patent: **08.05.2019**
(21) Application number: 14794042.3
(22) Date of filing: 08.05.2014
(51) Int. Cl.: F28F 1/32

(54) **HEAT EXCHANGER**
WÄRMETAUSCHER
ÉCHANGEUR DE CHALEUR

(30) Priority: 10.05.2013 CN 201310176381
(43) Date of publication of application: 16.03.2016
(73) Proprietor: Danfoss Micro Channel Heat Exchanger (Jiaxing) Co., Ltd., Haiyan County Jiaxing Zhejiang 314300 (CN)
(72) Inventor: CHEN, Hongbing, Jiaxing Zhejiang 314300 (CN); JIANG, Jianlong, Jiaxing Zhejiang 314300 (CN); XU, Yang, Jiaxing Zhejiang 314300 (CN); LI, Kaiquan, Jiaxing Zhejiang 314300 (CN); TUCKER, Jeffrey Lee, Jiaxing Zhejiang 314300 (CN)
(74) Representative: Keil & Schaafhausen Patent- und Rechtsanwälte PartGmbB
(86) International application number: PCT/CN2014/077038
(87) International publication number: WO 2014/180323

(56) References cited:
- CN-A- 102 326 048
- CN-A- 103 245 244
- CN-Y- 2 612 920
- DE-A1-102011 113 276
- GB-A- 735 384
- GB-A- 901 321

## Description

### Technical Field

The present invention relates to a heat exchanger.

### Background Art

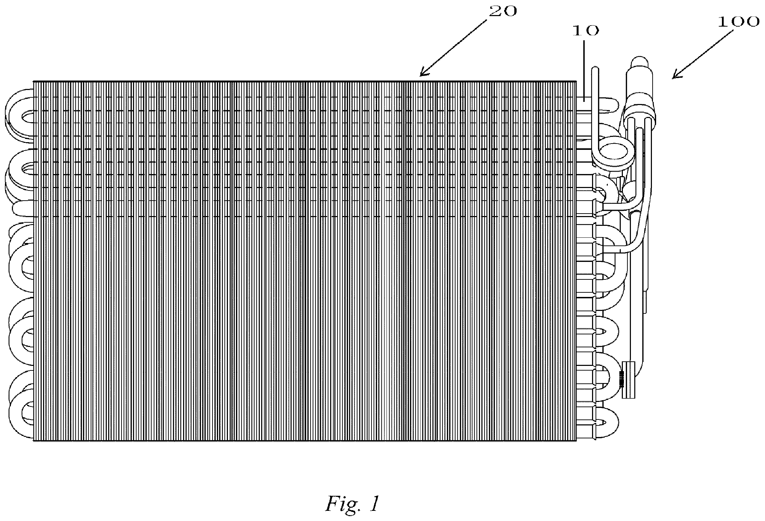

With reference to Fig. 1, a heat exchanger 100 comprises fins 20 and heat exchange tubes 10, the fins comprising tubular parts. The tubular parts of the fins are fastened onto the heat exchange tubes. In general, a mechanical tube expansion process and a soldering process are used for fastening the tubular parts of the fins onto the heat exchange tubes. For a given size of heat exchanger, the smaller the hydraulic diameter of the heat exchange tubes is, the higher the heat exchange performance is and the lower the material costs are. However, the mechanical tube expansion technique is greatly affected by the diameter of the heat exchange tubes, and currently can only be applied to copper tubes with a diameter larger than 5 mm, and aluminium tubes are not suitable for this technique. This is a great limitation of the current unlimited pursuit of cost-effectiveness in the air-conditioning industry. The soldering technique can be used for heat exchangers having heat exchange tubes with small hydraulic diameter; however, the problems, such as complex soldering process, high equipment investment, and unstable product quality, greatly limit the market competitiveness of micro-channel heat exchangers.

GB 735 384 A shows tubular heat exchangers according to the preamble of claim 1 in which the heat exchange tube and the fins are connected with each other by expanding the heat exchange tube radially outwardly.

### Summary of the Invention

An object of the present invention is to provide a heat exchanger and a method for manufacturing the heat exchanger, which not only can be used for tube-fin type heat exchangers, particularly the heat exchangers with heat exchange tubes of a diameter smaller than 5 mm, but can also be used for micro-channel heat exchangers, while ensuring the heat exchange performance, for instance, and this technique can replace the soldering and mechanical tube expansion techniques.

According to an aspect of the present invention, provided is a heat exchanger, comprising: a heat exchange tube; fins, comprising tubular parts; and rings for fastening the tubular part of the fin onto the heat exchange tube, wherein the tubular parts of the fins and the rings are alternately sheathed onto the heat exchange tube, and a pressure is exerted in an axial direction of the heat exchange tube on the tubular parts of the fins and the rings which are alternately sheathed onto the heat exchange tube, so as to fit the tubular part together with the ring in such a way that one is sheathed onto the other, for instance, a pressure is exerted in an axial direction of the heat exchange tube simultaneously on all the tubular parts of the fins and the rings which are alternately sheathed onto the heat exchange tube, so as to fit all the tubular parts and rings together in such a way that one is sheathed onto the other, wherein the ring is pressed onto the tubular part such that the tubular part is deformed or the tubular part is sheathed on the ring and the ring is constricted by applying an external force to press the fin down.

According to a further aspect of the present invention, the length of said ring in the axial direction is approximately equal to or greater than the length of the tubular part in the axial direction.

According to a further aspect of the present invention, the fin further comprises a substantially flat main body part and an annular protrusion part extending from the main body part to one side thereof, said tubular part extending from an end portion of said annular protrusion part that is remote from the main body part and being integrally formed with said annular protrusion part, and after the pressure is exerted on the tubular parts of the fins and the rings which are alternately sheathed onto the heat exchange tube, said annular protrusion part deforms.

According to a further aspect of the present invention, said annular protrusion part comprises a cone-shaped part.

According to a further aspect of the present invention, a wall of said tubular part has the shape of a conical surface, for instance, the wall of said tubular part is provided at an angle of 0 - 10 degrees or 0 - 25 degrees relative to the axial direction.

According to a further aspect of the present invention, a wall of the ring fitted with the tubular part has the shape of a conical surface, for instance, the wall of the ring fitted with the tubular part is provided at an angle of 1 - 3 degrees relative to the axial direction.

According to a further aspect of the present invention, said ring is fitted to an outer periphery of the tubular part.

According to a further aspect of the present invention, the wall of said cone-shaped part is provided at an angle of 45 - 90 degrees relative to the axial direction.

According to a further aspect of the present invention, said ring is fitted to an inner periphery of the tubular part, and an inner periphery of said ring is fitted to an outer periphery of the heat exchange tube.

According to a further aspect of the present invention, the length of said ring in the axial direction is approximately equal to or greater than 30% of the length of the tubular part in the axial direction.

According to a further aspect of the present invention, said ring has a groove extending in the axial direction.

According to a further aspect of the present invention, said groove extends from an axial end portion of said ring to an axial middle portion thereof.

According to a further aspect of the present invention, said tubular part has a groove extending in the axial direction.

According to a further aspect of the present invention, said annular protrusion part has a groove extending in the axial direction.

According to a further aspect of the present invention, the rings are arranged in one or more rows, two adjacent rings are connected via a connecting member, and the rings respectively correspond to the tubular parts on the fins.

According to another aspect of the present invention, provided is a method for manufacturing a heat exchanger, the method comprising the following steps: alternately sheathing tubular parts of fins and rings onto a heat exchange tube, and exerting a pressure in an axial direction of the heat exchange tube on the tubular parts of the fins and the rings which are alternately sheathed onto the heat exchange tube, so as to fit the tubular part together with the ring in such a way that one is sheathed onto the other, wherein the ring is pressed onto the tubular part such that the tubular part is deformed or the tubular part is sheathed on the ring and the ring is constricted by applying an external force to press the fin down.

The heat exchanger and the method for manufacturing the heat exchanger according to the present invention not only can be used for tube-fin type heat exchangers, particularly heat exchangers with heat exchange tubes of a diameter smaller than 5 mm, but can also be used for micro-channel heat exchangers, while ensuring the heat exchange performance, and this technique can replace the soldering and mechanical tube expansion techniques.

The smaller the diameter of the heat exchange tube is, the higher the heat exchange performance is and the lower the material costs are. When the diameter of the heat exchange tube is relatively small, the tube expansion technique cannot be used for the connection of the heat exchange tube and the fins, and the heat exchanger and the method for manufacturing the heat exchanger according to the present invention can avoid the complicated soldering process, thereby improving the product quality, and reducing the manufacturing costs of the product and the equipment investment.

### Description of the Drawings

Fig. 1 is a schematic view of a heat exchanger according to an embodiment of the present invention;
Fig. 2 is a schematic front view of fins of a heat exchanger according to a first embodiment of the present invention before assembly;
Fig. 3 is a schematic left view of the fins of the heat exchanger according to the first embodiment of the present invention before assembly;
Fig. 4a is a schematic enlarged front view of the fins of the heat exchanger according to the first embodiment of the present invention before assembly;
Fig. 4b is a schematic enlarged bottom view of the fins of the heat exchanger according to the first embodiment of the present invention before assembly;
Fig. 5a is a schematic enlarged front view of the fins of the heat exchanger according to a further example of the first embodiment of the present invention before assembly;
Fig. 5b is a schematic enlarged bottom view of the fins of the heat exchanger according to the further example of the first embodiment of the present invention before assembly;
Fig. 6 is a schematic enlarged bottom view of the fins of the heat exchanger according to another example of the first embodiment of the present invention before assembly;
Fig. 7a is a schematic view of a heat exchange tube, a tubular part of the fin and a ring of the heat exchanger according to the first embodiment of the present invention before compression;
Fig. 7b is a schematic view of the heat exchange tube, the tubular part of the fin and the ring of the heat exchanger according to the first embodiment of the present invention after compression;
Fig. 8 is a schematic view of the heat exchange tubes, the tubular parts of the fins and the rings of the heat exchanger according to the first embodiment of the present invention before compression, showing the alternate arrangement of the tubular parts of the fins and the rings;
Fig. 9a is a schematic sectional view of the ring of the heat exchanger according to the first embodiment of the present invention;
Fig. 9b is a schematic front view of the ring of the heat exchanger according to the first embodiment of the present invention;
Fig. 10a is a schematic front view of a set of rings of the heat exchanger according to the first embodiment of the present invention;
Fig. 10b is a schematic top view of the set of rings of the heat exchanger according to the first embodiment of the present invention;
Fig. 11a is a schematic view of a heat exchange tube, a tubular part of a fin and a ring of a heat exchanger according to a second embodiment of the present invention before compression;
Fig. 11b is a schematic view of the heat exchange tube, the tubular part of the fin and the ring of the heat exchanger according to the second embodiment of the present invention after compression;
Fig. 12 is a schematic view of the heat exchange tube, the tubular part of the fin and the ring of the heat exchanger according to a further example of the second embodiment of the present invention after compression;
Fig. 13a is a schematic enlarged front view of the fin of the heat exchanger according to the second embodiment of the present invention before assembly;
Fig. 13b is a schematic enlarged bottom view of the fin of the heat exchanger according to the second embodiment of the present invention before assembly;
Fig. 14 is a schematic view of the ring of the heat exchanger according to the second embodiment of the present invention;
Fig. 15a is a schematic front view of one example of the ring of the heat exchanger according to the second embodiment of the present invention;
Fig. 15b is a schematic top view of one example of the ring of the heat exchanger according to the second embodiment of the present invention;
Fig. 15c is a schematic front view of a further example of the ring of the heat exchanger according to the second embodiment of the present invention;
Fig. 15d is a schematic top view of the further example of the ring of the heat exchanger according to the second embodiment of the present invention;
Fig. 16a is a schematic front view of the ring of the heat exchanger according to an embodiment of the present invention;
Fig. 16b is a schematic top view of the ring of the heat exchanger according to an embodiment of the present invention; and
Fig. 17 is a schematic view of an apparatus for manufacturing a heat exchanger according to an embodiment of the present invention.

### Particular Embodiments

The present invention will be further described below in conjunction with the accompanying drawings and specific embodiments.

A heat exchanger 100 according to an embodiment of the present invention is shown in Fig. 1. As shown in figure 1, the heat exchanger 100 comprises a heat exchange tube 10 and a fin 20. The heat exchange tube 10 may have any cross-sectional shape, the heat exchange tube 10 passes through a tubular part 21 on the fin 20, and multiple fins 20 are stacked together.

### Embodiment 1

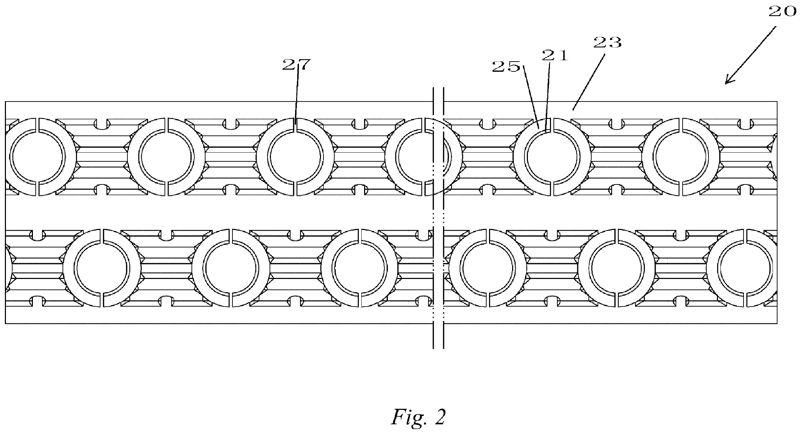

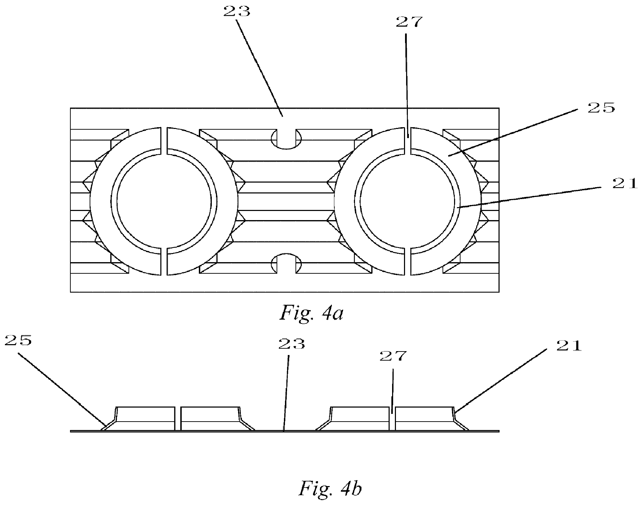

As shown in Figs. 2 - 8, the fin 20 comprises the tubular part 21, and the heat exchanger 100 further comprises a ring 30, which ring 30 is used for fastening the tubular part 21 of the fin 20 onto the heat exchange tube 10. The inner diameter of the tubular part 21 may be approximately equal to the outer diameter of the heat exchange tube 10, or may be slightly larger than the outer diameter of the heat exchange tube 10.

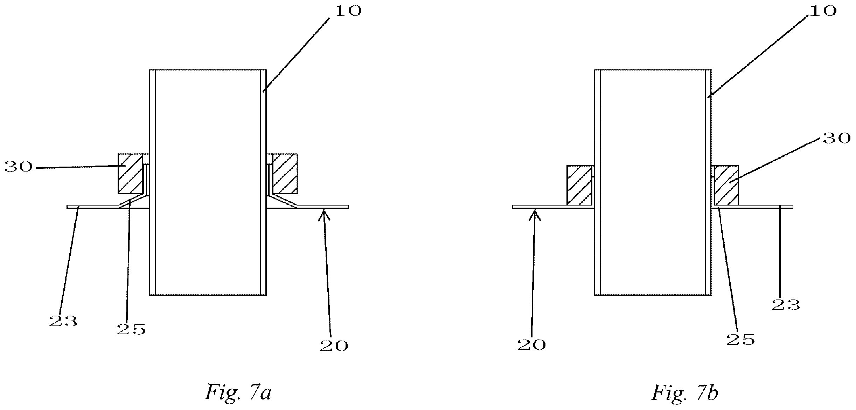

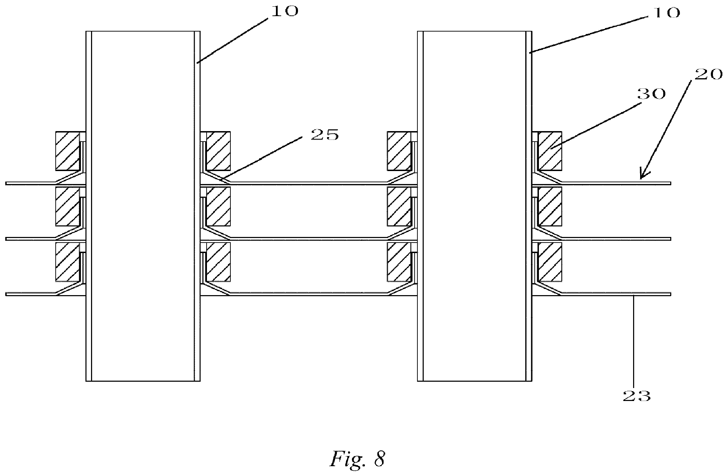

As shown in Figs. 7a, 7b and 8, the tubular parts 21 of the fins 20 and the rings 30 are alternately sheathed onto the heat exchange tube 10, and a pressure is exerted in an axial direction of the heat exchange tube 10 on the tubular parts 21 of the fins 20 and the rings 30 which are alternately sheathed onto the heat exchange tube 10, so as to fit the tubular part 21 together with the ring 30 in such a way that one is sheathed onto the other. Under the action of an external force, the rings 30 are pressed down and meanwhile the close contact between the heat exchange tube 10 and the fins 20 can be ensured. In the embodiment shown in Figs. 2 - 8, the ring 30 is sheathed onto the tubular part 21, that is to say, the ring 30 is fitted to an outer periphery of the tubular part 21. The ring 30, the tubular part 21 and the heat exchange tube 10 may be approximately coaxially fitted together with one another. A pressure, for instance, is exerted in an axial direction of the heat exchange tube simultaneously on all the tubular parts of the fins and the rings which are alternately sheathed onto the heat exchange tube, so as to fit all the tubular parts and rings together in such a way that one is sheathed onto the other. That is to say, the process of exerting pressure can be carried out once to fit all the tubular parts of the fins and the rings on one or each heat exchange tube together with each other in such a way that one is sheathed onto the other.

As shown in Figs. 7a - 9b, the length of the ring 30 in the axial direction may be approximately equal to or greater than the length of the tubular part 21 in the axial direction. For instance, the axial direction may be the axial direction of the assembled heat exchange tube 10.

As shown in Figs. 2 - 4 and 7a - 8, the fin 20 further comprises a substantially flat main body part 23 and an annular protrusion part 25 extending or protruding from the main body part 23 to one side thereof, the tubular part 21 extending from an end portion of the annular protrusion part 25 that is remote from the main body part 23 and being integrally formed with the annular protrusion part 25, and after the pressure is exerted on the tubular parts 21 of the fins 20 and the rings 30 which are alternately sheathed onto the heat exchange tube 10, the annular protrusion part 25 and the main body part 23 deform, such that, for instance, the annular protrusion part 25 and the main body part 23 are approximately located in the same plane, or compared with the situation in which they are not deformed, the annular protrusion part 25 is closer to the main body part 23 (or closer to the plane where the main body part 23 is located), or the protrusion thereof from the main body part 23 is smaller. In addition, for instance, the axial direction of the tubular part 21 and of the annular protrusion part 25 may be approximately perpendicular to the main body part 23. In the embodiment shown in Figs. 2 - 4 and 7a - 8, the annular protrusion part 25 of the fin 20 of the heat exchanger 100 is embodied as a cone-shaped part.

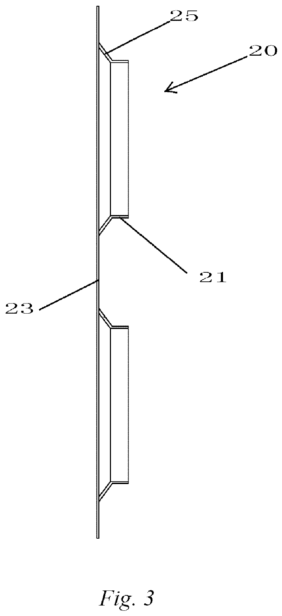

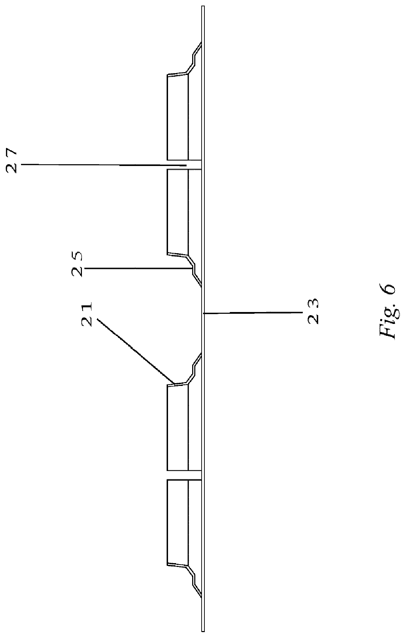

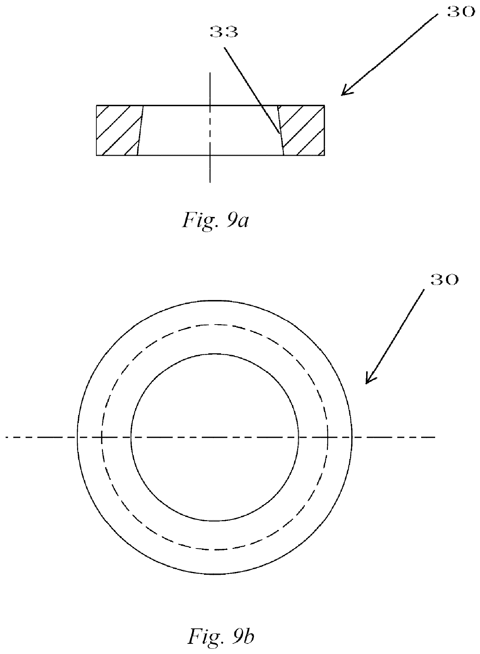

As shown in Figs. 2 - 9b, a wall of the tubular part 21 has the shape of a conical surface, for instance, the wall of the tubular part 21 may be provided at an angle of 0 - 25 degrees relative to the axial direction. The wall of the tubular part 21 may also have a cylindrical shape. Furthermore, the wall of the tubular part 21 may also have any other suitable shape. As shown in Fig. 9a, a wall 33 of the ring 30 fitted with the tubular part 21 (an inner wall of the ring 30) has the shape of a conical surface, for instance, the wall 33 of the ring 30 fitted with the tubular part 21 (the inner wall of the ring 30) may be provided at an angle of 1 - 3 degrees relative to the axial direction. As shown in Figs. 3 and 6, the wall of the cone-shaped part 25 may be provided at an angle of 45 - 90 degrees relative to the axial direction. For instance, the axial direction may be the axial direction of the assembled heat exchange tube 10.

As shown in Figs. 2 - 6, the tubular part 21 and the cone-shaped part 25 may have a groove 27 extending in the axial direction of the tubular part 21 and the cone-shaped part 25, and more particularly, the wall of the tubular part 21 and the cone-shaped part 25 may have a groove 27 extending in the axial direction of the tubular part 21 and the cone-shaped part 25. For instance, the groove 27 extends over the entire length in the axial direction of the tubular part 21 and the cone-shaped part 25, and the grooves 27 of the tubular part 21 and the cone-shaped part 25 are connected together and are approximately in one plane. The number of grooves 27 may be 2, 3 or more.

As shown in Figs. 7a - 8, the heat exchange tube 10 is inserted into the tubular part 21 of the fin, the ring 30 is sheathed onto the tubular part 21, and the annular protrusion part 25 and the groove 27 are provided on the fin 21; and under the action of an external force, the ring 30 is pressed down and meanwhile the close contact between the heat exchange tube 10 and the fin 20 can be ensured.

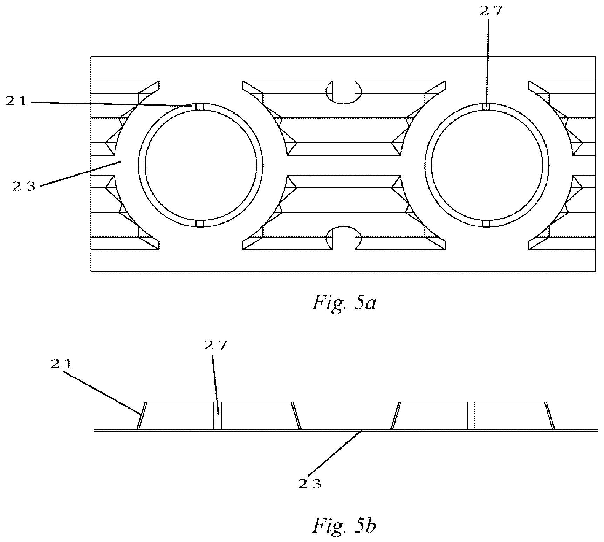

As shown in Figs. 5a and 5b, the fin 20 of the heat exchanger 100 may not have an annular protrusion part 25 but only the tubular part 21, the tubular part 21 extends from the main body part 23 to one side thereof, and the tubular part 21 is directly and integrally connected to the main body part 23. For instance, the axial direction of the tubular part 21 may be approximately perpendicular to the main body part 23.

As shown in Fig. 6, the annular protrusion part 25 of the fin 20 of the heat exchanger 100 may have any suitable shape, and the annular protrusion part may comprise one or more cone-shaped parts, for instance, two cone-shaped parts.

In the above-mentioned embodiment, the ring 30 is fitted to the outer periphery of the tubular part 21, and the tubular part 21 can be fixed onto the heat exchange tube 10 by means of the interference fit of the ring 30 and the tubular part 21, for instance, a hole part of the ring 30 is chamfered at two ends, so that by means of an axial pressure, the ring 30 is pressed onto the tubular part 21, so as to fix the tubular part 21 onto the heat exchange tube 10. As an alternative, the inner wall 33 of the ring 30 may have the shape of a cone surface, such that by means of an axial pressure, the ring 30 is pressed onto the tubular part 21, so as to fix the tubular part 21 onto the heat exchange tube 10. The inner wall 33 of the ring 30 may have the shape of a cone surface, or have the shape of a cylindrical surface.

In the above-mentioned embodiment, the tubular part 21 has a groove 27, or the tubular part 21 and the annular protrusion part 25 have a groove 27. As an alternative, the tubular part 21 and the annular protrusion part 25 may not have a groove 27; instead, the ring 30 is pressed onto the tubular part 21 such that the tubular part 21 deforms to fix the tubular part 21 onto the heat exchange tube 10.

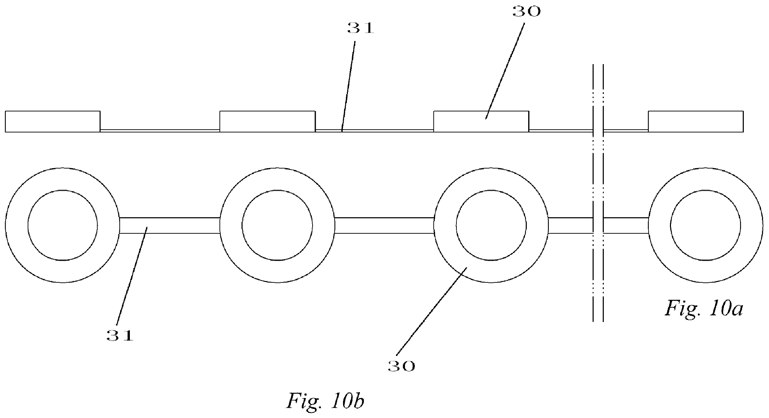

The rings 30 may be separately formed, or as shown in Figs. 10a and 10b, the rings 30 may be formed as a set of rings 30, and the rings 30 may be arranged in one or more rows. For instance, a set of rings 30 may comprise multiple rings 30, two adjacent rings 30 are connected via a connecting member 31, and the connecting member 31 may be a rod-like member. The number of rings 30 contained in one set of rings 30 may be equal to the number of tubular parts 21 in one row of tubular parts of the fins 20, or the number of tubular parts 21 in one row of tubular parts of the fins 20 is an integer multiple of the number of rings 30 contained in one set of rings 30. As an alternative, the number of rings 30 contained in one set of rings 30 may be any value. The rings 30 contained in one set of rings are approximately arranged along a straight line. The spacing between two rings 30 is approximately equal to the spacing between the heat exchange tubes 10 or the spacing between the tubular parts 21. Furthermore, the rings 30 may be formed as an array, such as a rectangular array, two adjacent rings are connected via a connecting member 31, and all the rings 30 respectively correspond to the tubular parts 21 on the fins.

### Embodiment 2

Only the difference between the second embodiment and the first embodiment is described below.

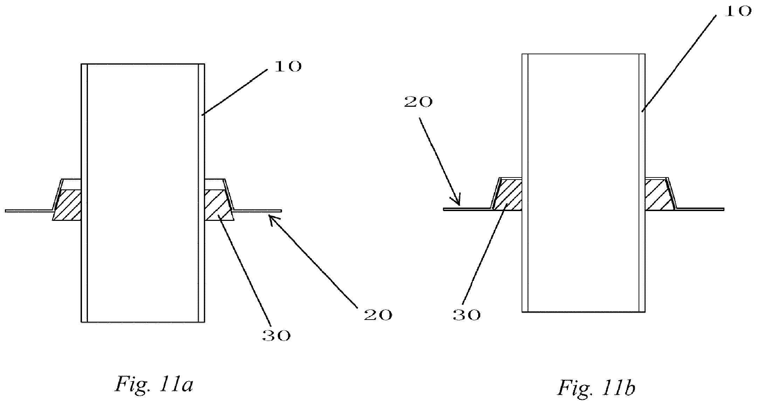

With reference to Figs. 11a - 13b, the fin 20 comprises a tubular part 21. The tubular part 21 extends from a main body part 23 to one side thereof, i.e. the tubular part 21 is directly and integrally connected to the main body part 23. For instance, the axial direction of the tubular part 21 may be approximately perpendicular to the main body part 23. In the second embodiment, the ring 30 is fitted onto the inner periphery of the tubular part 21, and the inner periphery of the ring 30 is fitted onto the outer periphery of the heat exchange tube 10. That is to say, the tubular part 21 is sheathed onto the ring 30, and the ring 30 is sheathed onto the heat exchange tube 10. The inner diameter of the ring 30 may be equal to or slightly larger than the outer diameter of the heat exchange tube 10.

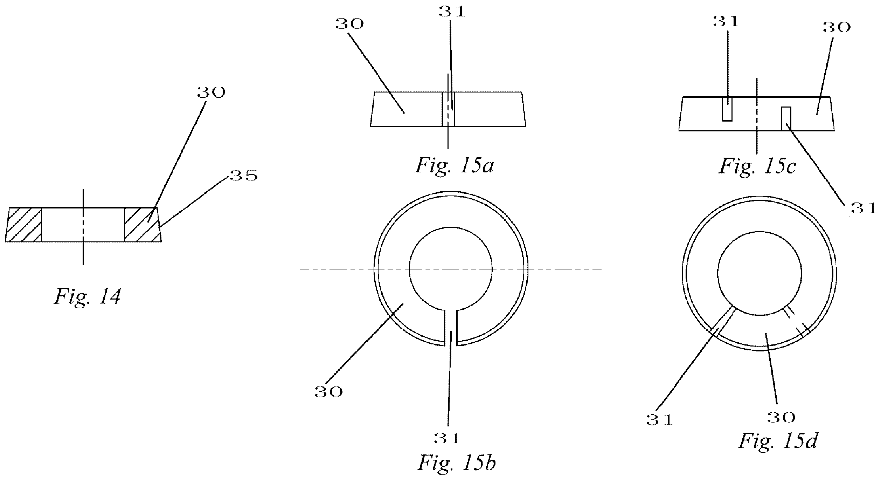

As shown in Fig. 14, a wall 35 of the ring 30 fitted with the tubular part 21 (an outer wall of the ring 30) has the shape of a conical surface, for instance, the wall 35 of the ring 30 fitted with the tubular part 21 (the outer wall of the ring 30) may be provided at an angle of 1 - 3 degrees relative to the axial direction.

As shown in Figs. 15a and 15b, the ring 30 has a groove 31 extending in the axial direction. That is to say, the ring 30 is formed as an opening ring. As shown in Figs. 15c and 15d, the groove 31 may extend from an axial end portion of the ring 30 to an axial middle portion of the ring 30. For instance, two or more grooves 31 may respectively extend from an axial end portion of the ring 30 to the axial middle portion of the ring 30, and the total length of one groove extending from one end and one groove extending from the other end may be larger than the length of the ring 30 in the axial direction, or may be smaller than or equal to the length of the ring 30 in the axial direction. According to an example, the length of the groove 31 in the axial direction of the ring 30 may be larger than 3/4 of the axial length of the ring 30.

In the embodiment shown in Figs. 11a and 11b, the ring 30 is sheathed onto the heat exchange tube 10, the tubular part 21 is then sheathed onto the ring 30, an external force is applied to press the fin 20 down, and the ring 30, being able to constrict (due to being deformable or/and having a groove), holds the heat exchange tube 10 tightly, thereby ensuring the close contact of the fin 20, the heat exchange tube 10 and the ring 30.

In the above-mentioned embodiment, the ring 30 is fitted to the inner periphery of the tubular part 21, the tubular part 21 can be fixed onto the ring 30 by means of the interference fit of the ring 30 and the tubular part 21, and the ring 30 is fixed onto the heat exchange tube 10, for instance, by means of an axial pressure, the ring 30 is pressed into the tubular part 21, so as to fix the ring 30 onto the heat exchange tube 10 and fix the tubular part 21 onto the ring 30. As an alternative, the wall of the tubular part 21 may have the shape of a cone surface, and/or the outer wall of the ring 30 may have the shape of a cone surface, such that by means of an axial pressure, the ring 30 is pressed into the tubular part 21, so as to fix the tubular part 21 onto the heat exchange tube 10.

In the above-mentioned embodiment, the ring 30 has a groove 31. As an alternative, the ring 30 may not have a groove 31; instead, the ring 30 is pressed into the tubular part 21 such that the ring 30 deforms to fix the ring 30 onto the heat exchange tube 10, so as to fix the tubular part 21 onto the ring 30.

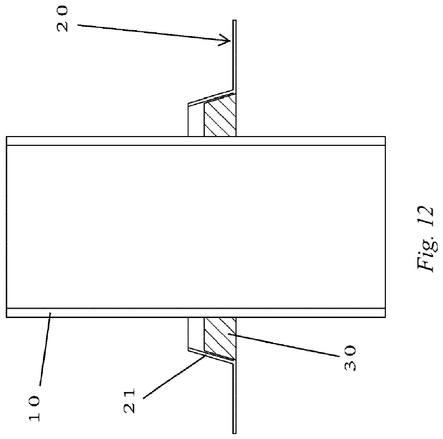

As shown in Figs. 11b and 12, the length of the ring 30 in the axial direction may be approximately equal to or greater than the length of the tubular part 21 in the axial direction. For instance, the axial direction may be the axial direction of the assembled heat exchange tube 10. As an alternative, the length of the ring 30 in the axial direction may also be less than the length of the tubular part 21 in the axial direction. In this case, after the rings 30, the tubular parts 21 and the heat exchange tube 10 are fitted together with one another, part of the wall of the tubular parts 21 may be located between the rings 30. According to an example of the present invention, the length of the ring 30 in the axial direction is approximately equal to or greater than 30% of the length of the tubular part 21 in the axial direction.

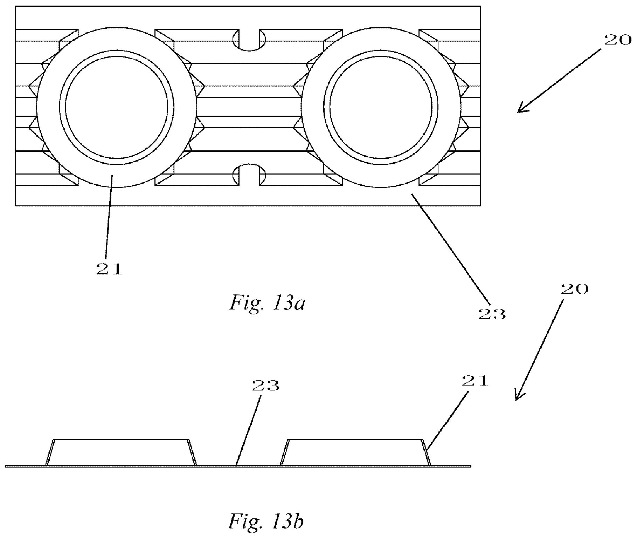

As shown in Figs. 13a and 13b, the wall of the tubular part 21 has the shape of a conical surface, for instance, the wall of the tubular part 21 may be provided at an angle of 0 - 25 degrees relative to the axial direction. The wall of the tubular part 21 may also have a cylindrical shape. Furthermore, the wall of the tubular part 21 may also have any other suitable shape.

The material of the ring 30 may be a material with a high thermal conductivity.

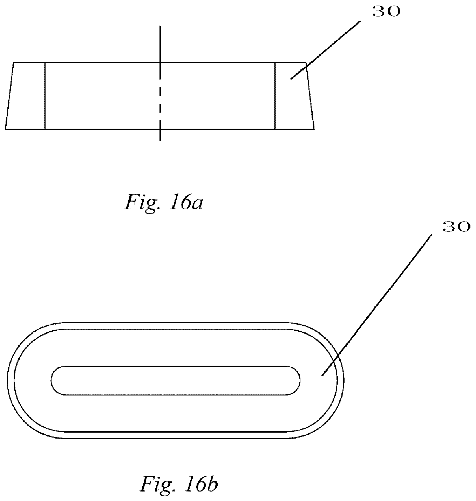

As shown in Figs. 16a and 16b, the ring 30 may be correspondingly shaped depending on the cross-sectional shape of the heat exchange tube 10, for instance, the ring 30 may have a circular shape, an oval shape, or a shape corresponding to the cross-sectional shape of a flat tube serving as the heat exchange tube. The tubular part 21 may also have the corresponding shape.

The method of manufacturing a heat exchanger according to the present invention will be described below.

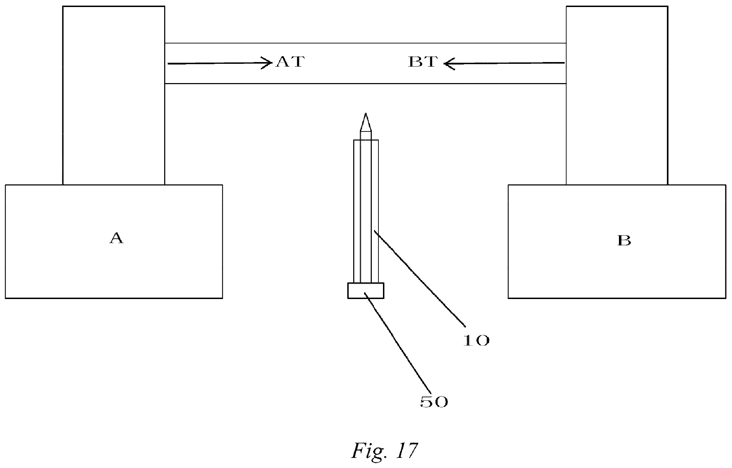

The method of manufacturing a heat exchanger according to the present invention is described below with reference to Figs. 8 and 17.

Fins 20 are formed by an apparatus A such as a fin-punching apparatus (such as a punch, a press), and rings 30 are formed by an apparatus B such as a ring punching apparatus (such as a punch, a press). For instance, a metal sheet is used to form an integral fin 20 by means of punching, and a metal sheet is used to form an integral ring 30 by means of punching. With a transfer mechanism, the fins 20 formed by the apparatus A are transported to an assembly station in the direction AT, while the rings 30 formed by the apparatus B are transported to the assembly station in the direction BT, and a heat exchange tube 10 is fixed onto a bracket 50.

The tubular parts 21 of the fins 20 and the rings 30 are alternately sheathed onto the heat exchange tube 10, and a pressure is exerted in an axial direction of the heat exchange tube on the tubular parts 21 of the fins 20 and the rings 30 which are alternately sheathed onto the heat exchange tube 10, so as to fit the tubular part 21 together with the ring 30 in such a way that one is sheathed onto the other. For instance, the tubular part 21 is sheathed onto the ring 30, or the ring 30 is sheathed onto the tubular part 21. For instance, the tubular part 21 and the ring 30 are tightly compressed by a compression device (such as a press). A pressure, for instance, is exerted in an axial direction of the heat exchange tube simultaneously on all the tubular parts of the fins and the rings which are alternately sheathed onto the heat exchange tube, so as to fit all the tubular parts and rings together in such a way that one is sheathed onto the other. That is to say, the process of exerting pressure is carried out once to fit all the tubular parts of the fins and the rings on one or each heat exchange tube together with each other in such a way that one is sheathed onto the other.

This processing method can be used with automatic control, has a stable product quality and a high efficiency, and can adapt to processing by high speed punch. The method of the present invention is suitable for both single-row heat exchangers and multi-row heat exchangers.

The smaller the diameter of the heat exchange tube is, the higher the heat exchange performance is and the lower the material costs are. When the diameter of the heat exchange tube is relatively small, the tube expansion technique cannot be used for the connection of the heat exchange tube and the fins, and the technical solution of the present invention can avoid the complicated soldering process, thereby improving the product quality, and reducing the manufacturing costs of the product and the equipment investment.

It should be noted that all or part of the technical features of the above embodiments of the present invention can be combined in any suitable manner to form new embodiments.

## Claims

1. A heat exchanger (100) comprising:
a heat exchange tube (10);
fins (20), comprising tubular parts (21); and
rings (30) for fastening the tubular part (21) of the fin (20) onto the heat exchange tube (10), wherein
the tubular parts (21) of the fins (20) and the rings (30) are alternately sheathed onto the heat exchange tube (10), **characterized in that** a pressure is exerted in an axial direction of the heat exchange tube (10) on the tubular parts (21) of the fins (20) and the rings (30) which are alternately sheathed onto the heat exchange tube (10), so as to fit the tubular part (21) together with the ring (30) in such a way that one is sheathed onto the other, wherein the ring (30) is pressed onto the tubular part (21) such that the tubular part (21) is deformed so as to be fixed to the heat exchanger tube (10) or the tubular part (21) is sheathed on the ring (30) and the ring (30) is constricted so as to hold the heat exchanger tube (10) tightly by applying an external force to press the fin (20) down in the said axial direction.

2. The heat exchanger as claimed in claim 1, **characterized in that**
the length of said ring (30) in the axial direction is approximately equal to or greater than the length of the tubular part (21) in the axial direction.

3. The heat exchanger as claimed in claim 1, **characterized in that**
the fin (20) further comprises a substantially flat main body part (23) and an annular protrusion part (25) extending from the main body part (23) to one side thereof, said tubular part (21) extending from an end portion of said annular protrusion part (25) that is remote from the main body part (23) and being integrally formed with said annular protrusion part (25), and
after the pressure is exerted on the tubular parts (21) of the fins (20) and the rings (30) which are alternately sheathed onto the heat exchange tube (10), said annular protrusion part (25) deforms.

4. The heat exchanger as claimed in claim (3), **characterized in that**
said annular protrusion part (25) comprises a cone-shaped part.

5. The heat exchanger as claimed in claim 1, **characterized in that**
a wall of said tubular part (21) has the shape of a conical surface.

6. The heat exchanger as claimed in claim 1, **characterized in that**
a wall of said tubular part (21) is provided at an angle of 0 - 25 degrees relative to the axial direction.

7. The heat exchanger as claimed in claim 1, **characterized in that**
a wall of the ring (30) fitted with the tubular part (21) has the shape of a conical surface.

8. The heat exchanger as claimed in claim 1, **characterized in that**
a wall of the ring (30) fitted with the tubular part (21) is provided at an angle of 1 - 3 degrees relative to the axial direction.

9. The heat exchanger as claimed in claim 1 or 3, **characterized in that**
said ring (30) is fitted to an outer periphery of the tubular part (21).

10. The heat exchanger as claimed in claim 4, **characterized in that**
a wall of said cone-shaped part is provided at an angle of 45 - 90 degrees relative to the axial direction.

11. The heat exchanger as claimed in claim 1, **characterized in that**
said ring (30) is fitted to an inner periphery of the tubular part (21), and an inner periphery of said ring (30) is fitted to an outer periphery of the heat exchange tube (10).

12. The heat exchanger as claimed in claim (11), **characterized in that**
the length of said ring (30) in the axial direction is approximately equal to or greater than 30% of the length of the tubular part (21) in the axial direction.

13. The heat exchanger as claimed in claim 11, **characterized in that**
said ring (30) has a groove (31) extending in the axial direction.

14. The heat exchanger as claimed in claim 11, **characterized in that**
said groove (31) extends from an axial end portion of said ring to an axial middle portion thereof.

15. The heat exchanger as claimed in claim 1, **characterized in that**
said tubular part (21) has a groove (27) extending in the axial direction.

16. The heat exchanger as claimed in claim 3, **characterized in that**
said annular protrusion part (25) has a groove (27) extending in the axial direction.

17. The heat exchanger as claimed in claim 1, **characterized in that**
the rings (30) are arranged in one or more rows, two adjacent rings are connected via a connecting member (31), and the rings (30) respectively correspond to the tubular parts (21) on the fins (20).

18. A method for manufacturing a heat exchanger (100) as defined in any of claims 1-17, comprising the following steps:
alternately sheathing tubular parts (21) of fins (20) and rings (30) onto a heat exchanger tube (10), **characterized in that**
a pressure (13) is exerted in an axial direction of the heat exchange tube (10) on the tubular parts (21) of the fins (20) and the rings (30) which are alternately sheathed onto the heat exchanger tube (10), so as to fit the tubular part (21) together with the ring (30) in such a way that one is sheathed onto the other, wherein the ring (30) is pressed onto the tubular part (21) such that the tubular part (21) is deformed so as to be fixed to the heat exchanger tube (10) or the tubular part (21) is sheathed on the ring (30) and the ring (30) is constricted so as to hold the heat exchanger tube (10) tightly by applying an external force to press the fin (20) down in the said axial direction.

## Patentansprüche

1. Wärmetauscher (100), der Folgendes umfasst:
ein Wärmetauscherrohr (10);
Lamellen (20), die röhrenförmige Teile (21) umfassen; und
Ringe (30) zum Befestigen des röhrenförmigen Teils (21) der Lamelle (20) an dem Wärmetauscherrohr (10), wobei
die röhrenförmigen Teile (21) der Lamellen (20) und die Ringe (30) abwechselnd als Ummantelung auf dem Wärmetauscherrohr (10) angebracht sind, **dadurch gekennzeichnet, dass** in einer axialen Richtung des Wärmetauscherrohrs (10) auf die röhrenförmigen Teile (21) der Lamellen (20) und die Ringe (30), die abwechselnd als Ummantelung aus dem Wärmetauscherrohr (10) angebracht sind, ein Druck ausgeübt wird, sodass der röhrenförmige Teil (21) zusammen mit dem Ring (30) so in Passung zu bringen, dass eine Komponente eine Ummantelung auf der anderen ist, während der Ring (30) so auf den röhrenförmigen Teil (21) gedrückt ist, dass der röhrenförmige Teil (21) verformt wird, um an dem Wärmetauscherrohr (10) befestigt zu werden, oder der röhrenförmige Teil (21) ist als Ummantelung auf dem Ring (30) angebracht, und der Ring (30) ist so verengt, dass er das Wärmetauscherrohr (10) durch Anwenden einer externen Kraft fest hält, um die Lamelle (20) in der axialen Richtung nach unten zu drücken.

2. Wärmetauscher nach Anspruch 1, **dadurch gekennzeichnet, dass**
die Länge des Rings (30) in der axialen Richtung annähernd gleich groß wie oder größer als die Länge des röhrenförmigen Teils (21) in der axialen Richtung ist.

3. Wärmetauscher nach Anspruch 1, **dadurch gekennzeichnet, dass**
die Lamelle (20) ferner einen im Wesentlichen flachen Hauptkörperteil (23) und einen ringförmigen Vorsprungsteil (25) umfasst, der sich von dem Hauptkörperteil (23) zu einer Seite davon erstreckt, wobei sich der röhrenförmige Teil (21) von einem Abschlussteil des ringförmigen Vorsprungsteiles (25), das von dem Hauptkörperteil (23) entfernt ist, erstreckt und mit dem ringförmigen Vorsprungsteil (25) einstückig ausgebildet ist, und
sich das ringförmige Vorsprungsteil (25) nach dem Ausüben des Drucks auf die röhrenförmigen Teile (21) der Lamellen (20) und die Ringe (30), die abwechselnd als Ummantelung auf dem Wärmetauscherrohr (10) angebracht sind, verformt.

4. Wärmetauscher nach Anspruch 3, **dadurch gekennzeichnet, dass**
der ringförmige Vorsprungsteil (25) einen kegelförmigen Teil umfasst.

5. Wärmetauscher nach Anspruch 1, **dadurch gekennzeichnet, dass**
eine Wand des röhrenförmigen Teils (21) die Form einer konischen Oberfläche aufweist.

6. Wärmetauscher nach Anspruch 1, **dadurch gekennzeichnet, dass**
eine Wand des röhrenförmigen Teils (21) relativ zu der axialen Richtung in einem Winkel von 0-25 Grad bereitgestellt ist.

7. Wärmetauscher nach Anspruch 1, **dadurch gekennzeichnet, dass**
eine Wand des Ringes (30), der an dem röhrenförmigen Teil (21) befestigt ist, die Form einer konischen Oberfläche hat.

8. Wärmetauscher nach Anspruch 1, **dadurch gekennzeichnet, dass**
eine Wand des Ringes (30), der an dem röhrenförmigen Teil (21) befestigt ist, relativ zu der axialen Richtung in einem Winkel von 1-3 Grad bereitgestellt ist.

9. Wärmetauscher nach Anspruch 1 oder 3, **dadurch gekennzeichnet, dass**
der Ring (30) an einer äußeren Peripherie des röhrenförmigen Teils (21) befestigt ist.

10. Wärmetauscher nach Anspruch 4, **dadurch gekennzeichnet, dass**
eine Wand des kegelförmigen Teils relativ zu der axialen Richtung in einem Winkel von 45-90 Grad bereitgestellt ist.

11. Wärmetauscher nach Anspruch 1, **dadurch gekennzeichnet, dass**
der Ring (30) an einer inneren Peripherie des röhrenförmigen Teils (21) befestigt ist, und eine innere Peripherie des Rings (30) ist an einer äußeren Peripherie des Wärmetauscherrohrs (10) befestigt.

12. Wärmetauscher nach Anspruch 11, **dadurch gekennzeichnet, dass**
die Länge des Rings (30) in der axialen Richtung annähernd gleich oder größer als 30 % der Länge des röhrenförmigen Teils (21) in der axialen Richtung ist.

13. Wärmetauscher nach Anspruch 11, **dadurch gekennzeichnet, dass**
der Ring (30) eine Nut (31) aufweist, die sich in der axialen Richtung erstreckt.

14. Wärmetauscher nach Anspruch 11, **dadurch gekennzeichnet, dass**
sich die Nut (31) von einem axialen Endabschnitt des Rings zu einem axialen mittleren Teil davon erstreckt.

15. Wärmetauscher nach Anspruch 1, **dadurch gekennzeichnet, dass**
der röhrenförmige Teil (21) eine Nut (27) aufweist, die sich in der axialen Richtung erstreckt.

16. Wärmetauscher nach Anspruch 3, **dadurch gekennzeichnet, dass**
der ringförmige Vorsprungsteil (25) eine Nut (27) aufweist, die sich in der axialen Richtung erstreckt.

17. Wärmetauscher nach Anspruch 1, **dadurch gekennzeichnet, dass**
die Ringe (30) in einer oder mehreren Reihen angeordnet sind, zwei angrenzende Ringe über ein Verbindungselement (31) verbunden sind, und die Ringe (30) jeweils den röhrenförmigen Teilen (21) der Lamellen (20) entsprechen.

18. Verfahren zur Herstellung eines Wärmetauschers (100) nach einem der Ansprüche 1-17, das die folgenden Schritte umfasst:
abwechselndes Anbringen röhrenförmiger Teile (21) von Lamellen (20) und Ringen (30) als Ummantelung auf einem Wärmetauscherrohr (10), **dadurch gekennzeichnet, dass**
in einer axialen Richtung des Wärmetauscherrohrs (10) auf die röhrenförmigen Teile (21) der Lamellen (20) und die Ringe (30), die abwechselnd als Ummantelung auf dem Wärmetauscherrohr (10) angebracht sind, ein Druck (13) ausgeübt wird, sodass der röhrenförmige Teil (21) zusammen mit dem Ring (30) so in Passung gebracht wird, dass eine Komponente eine Ummantelung auf der anderen ist, wobei der Ring (30) so auf den röhrenförmigen Teil (21) gedrückt ist, dass der röhrenförmige Teil (21) verformt wird, um an dem Wärmetauscherrohr (10) befestigt zu werden, oder der röhrenförmige Teil (21) ist als Ummantelung auf dem Ring (30) angebracht, und der Ring (30) ist so verengt, dass er das Wärmetauscherrohr (10) durch Anwenden einer externen Kraft fest hält, um die Lamelle (20) in der axialen Richtung nach unten zu drücken.

## Revendications

1. Échangeur de chaleur (100) comprenant :
un tube d'échange de chaleur (10) ;
des ailettes (20), comprenant des parties tubulaires (21) ; et
des bagues (30) destinées à fixer la partie tubulaire (21) de l'ailette (20) sur le tube d'échange de chaleur (10), dans lequel
les parties tubulaires (21) des ailettes (20) et les bagues (30) sont gainées en alternance sur le tube d'échange de chaleur (10), **caractérisé en ce qu'**une pression est exercée dans une direction axiale du tube d'échange de chaleur (10) sur les parties tubulaires (21) des ailettes (20) et sur les bagues (30) qui sont gainées en alternance sur le tube d'échange de chaleur (10), de façon à ajuster la partie tubulaire (21) conjointement à la bague (30) de telle sorte que l'une soit gainée sur l'autre, dans lequel la bague (30) est pressée sur la partie tubulaire (21) de sorte que la partie tubulaire (21) soit déformée pour être fixée au tube d'échange de chaleur (10) ou la partie tubulaire (21) est gainée sur la bague (30) et la bague (30) subit une constriction afin de retenir fermement le tube d'échange de chaleur (10) par l'application d'une force externe de pression de l'ailette (20) vers le bas dans ladite direction axiale.

2. Échangeur de chaleur selon la revendication 1, **caractérisé en ce que**
la longueur de ladite bague (30) dans la direction axiale est approximativement égale à ou supérieure à la longueur de la partie tubulaire (21) dans la direction axiale.

3. Échangeur de chaleur selon la revendication 1, **caractérisé en ce que**
l'ailette (20) comprend en outre une partie de corps principal sensiblement plate (23) et une partie annulaire faisant saillie (25) s'étendant depuis la partie de corps principal (23) sur un de ses côtés, ladite partie tubulaire (21) s'étendant depuis une partie d'extrémité de ladite partie annulaire faisant saillie (25) qui est éloignée de la partie de corps principal (23) et étant formée d'un seul tenant avec ladite partie annulaire faisant saillie (25), et
après que la pression est exercée sur les parties tubulaires (25) des ailettes (20) et sur les bagues (30) qui sont gainées en alternance sur le tube d'échange de chaleur (10), ladite partie annulaire faisant saillie (21) se déforme.

4. Échangeur de chaleur selon la revendication 3, **caractérisé en ce que**
ladite partie annulaire faisant saillie (25) comprend une partie en forme de cône.

5. Échangeur de chaleur selon la revendication 1, **caractérisé en ce que**
une paroi de ladite partie tubulaire (21) présente la forme d'une surface conique.

6. Échangeur de chaleur selon la revendication 1, **caractérisé en ce que**
une paroi de ladite partie tubulaire (21) est placée à un angle de 0 à 25 degrés par rapport à la direction axiale.

7. Échangeur de chaleur selon la revendication 1, **caractérisé en ce que**
une paroi de la bague (30) ajustée sur la partie tubulaire (21) présente une forme de surface conique.

8. Échangeur de chaleur selon la revendication 1, **caractérisé en ce que**
une paroi de la bague (30) ajustée sur la partie tubulaire (21) est placée à un angle de 1 à 3 degrés par rapport à la direction axiale.

9. Échangeur de chaleur selon la revendication 1 ou 3, **caractérisé en ce que**
ladite bague (30) est ajustée sur une périphérie extérieure de la partie tubulaire (21).

10. Échangeur de chaleur selon la revendication 4, **caractérisé en ce que**
une paroi de ladite partie en forme de cône est placée à un angle de 45 à 90 degrés par rapport à la direction axiale.

11. Échangeur de chaleur selon la revendication 1, **caractérisé en ce que**
ladite bague (30) est ajustée sur une périphérie intérieure de la partie tubulaire (21), et une périphérie intérieure de ladite bague (30) est ajustée sur une périphérie extérieure du tube d'échange de chaleur (10).

12. Échangeur de chaleur selon la revendication 11, **caractérisé en ce que**
la longueur de ladite bague (30) dans la direction axiale est approximativement égale à ou supérieure à 30 % de la longueur de la partie tubulaire (21) dans la direction axiale.

13. Échangeur de chaleur selon la revendication 11, **caractérisé en ce que**
ladite bague (30) possède une rainure (31) s'étendant dans la direction axiale.

14. Échangeur de chaleur selon la revendication 11, **caractérisé en ce que**
ladite rainure (31) s'étend à partir d'une partie d'extrémité axiale de ladite bague jusqu'à une partie intermédiaire axiale de celle-ci.

15. Échangeur de chaleur selon la revendication 1, **caractérisé en ce que**
ladite partie tubulaire (21) possède une rainure (27) s'étendant dans la direction axiale.

16. Échangeur de chaleur selon la revendication 3, **caractérisé en ce que**
ladite partie annulaire faisant saillie (25) possède une rainure (27) s'étendant dans la direction axiale.

17. Échangeur de chaleur selon la revendication 1, **caractérisé en ce que**
les bagues (30) sont disposées en une ou plusieurs rangées, deux bagues adjacentes sont raccordées par le biais d'un élément de raccordement (31), et les bagues (30) correspondent respectivement aux parties tubulaires (21) sur les ailettes (20).

18. Procédé de fabrication d'un échangeur de chaleur (100) selon l'une quelconque des revendications 1 à 17, comprenant les étapes suivantes :
le gainage en alternance de parties tubulaires (21) d'ailettes (20) et de bagues (30) sur un tube d'échange de chaleur (10), **caractérisé en ce que**
une pression (13) est exercée dans une direction axiale du tube d'échange de chaleur (10) sur les parties tubulaires (21) des ailettes (20) et sur les bagues (30) qui sont gainées en alternance sur le tube d'échange de chaleur (10), de façon à ajuster la partie tubulaire (21) conjointement à la bague (30) de telle sorte que l'une soit gainée sur l'autre, dans lequel la bague (30) est pressée sur la partie tubulaire (21) de sorte que la partie tubulaire (21) soit déformée pour être fixée au tube d'échange de chaleur (10) ou la partie tubulaire (21) est gainée sur la bague (30) et la bague (30) subit une constriction afin de retenir fermement le tube d'échange de chaleur (10) par l'application d'une force externe de pression de l'ailette (20) vers le bas dans ladite direction axiale.
